Europäisches Patentamt

**European Patent Office**

**Office européen des brevets**

(19)

(11) Veröffentlichungsnummer: **0 034 247**

**A1**

(12) # EUROPÄISCHE PATENTANMELDUNG

(21) Anmeldenummer: **81100142.9**

(22) Anmeldetag: **10.01.81**

(51) Int. Cl.³: **B 60 R 21/10**
**A 62 B 35/02**

(30) Priorität: **19.02.80 DE 3006147**

(43) Veröffentlichungstag der Anmeldung:
**26.08.81 Patentblatt 81/34**

(84) Benannte Vertragsstaaten:
**AT BE DE FR GB IT NL SE**

(71) Anmelder: **Irvin Auto Safety GmbH**
**Oststrasse 58**
**D-2000 Hamburg-Norderstedt(DE)**

(72) Erfinder: **Zerling, Jörn**
**Langenhorner Strasse Ost 11A**
**D-2000 Hamburg 65(DE)**

(74) Vertreter: **Patentanwälte Dipl.-Ing. H. Hauck Dipl.-Phys.**
**W. Schmitz Dipl.-Ing. E. Graalfs**
**Dipl.-Ing. W. Wehnert Dipl.-Ing. W. Carstens Dr.-Ing. W.**
**Döring Mozartstrasse 23**
**D-8000 München 2(DE)**

(54) **Automatische Sperrvorrichtung für einen Sicherheitsgurt.**

(57) Eine auf der Gurtwelle (12) befestigte Steuerschnecke (25) ist mit einer Steuermutter (30) verschraubt. Verdreht sich die Gurtwelle (12) gegenüber der Steuermutter (30) bei einer bestimmten Gurtbeschleunigung oder als Folge von Fahrzeugbewegungen, so gelangt die Steuermutter (30) in Antriebsverbindung mit einem Übertragungsglied (40), wodurch eine im Gehäuse (10) abgestützte Sperrklaue (50) in Eingriff mit einem auf der Gurtwelle (12) befestigten Sperrad (22) gebracht wird.

FIG.1

EP 0 034 247 A1

Automatische Sperrvorrichtung für einen

Sicherheitsgurt

Die Erfindung betrifft eine automatische Sperrvorrichtung für einen Sicherheitsgurt mit einem an einem Fahrzeug befestigten Gehäuse, in dem eine Welle zum Aufwickeln des Gurtes drehbar angeordnet ist, mit einem auf der Welle befestigten, Sperrzähne tragenden Sperrad, mindestens einem am Gehäuse abgestützten Sperriegel und einem Steuerteil, das beim Ausziehen des Gurtes und/oder Bewegungen des Fahrzeuges betätigbar ist und den Sperriegel in Eingriff mit dem Sperrad bringt.

Es ist bekannt (DE-OS 28 45 010), das Ansprechen der Sperrvorrichtung in Abhängigkeit von einer bestimmten Beschleunigung des Gurtes dadurch herbeizuführen, daß auf der Gurtwelle eine Trägheitsscheibe drehbar gelagert ist, die Steuerflächen aufweist, die mit Sperrgliedern zusammenwirken, die an einer mit der Welle befestigten Scheibe gelagert sind. Erfährt die Welle beim Herausziehen des Gurtes eine bestimmte Beschleunigung, so bleibt die Trägheitsscheibe infolge ihres Beharrungsvermögens zurück, und die so entstehende Relativdrehung zwischen Trägheitsscheibe und Gurtwelle wird dazu verwendet, die Sperriegel in Verriegelungseingriff mit dem Steuerteil zu führen, das nun verdreht wird und damit den im Gehäuse abgestützten Sperriegel in Eingriff mit einem Zahn des Sperrades drückt.

Das Steuerteil zum Auslösen der Sperrvorrichtung kann auch fahrzeugsensitiv, also von Fahrzeugbewegungen abhängig betätigt werden. Hierzu dient ein Pendel- oder Kugelsystem, bei dessen Ausschwenken ein Hebel angehoben wird, der dadurch an dem Steuerteil angreift, wodurch dieses verdrehbar ist und den Sperriegel in Eingriff mit dem Sperrad bringt.

Der Erfindung liegt die Aufgabe zugrunde, den Bauaufwand solcher bekannter Sperrvorrichtungen erheblich zu verrin- gern. Insbesondere soll die Anzahl der benötigten Bauteile verkleinert und der Montageaufwand sowie das Gewicht verringert werden.

Die Aufgabe ist erfindungsgemäß dadurch gelöst, daß das Steuerteil auf der Welle mittels einer Steuerschnecke gelagert ist, bei seiner Schraubbewegung auf der Steuerschnecke mit dem Sperriegel kuppelbar ist und den Sperriegel über eine Steuerkante in Eingriff mit dem Sperrad bringt.

Der wesentliche Vorteil besteht darin, daß infolge der Steuerschnecke das Steuerteil zwei Bewegungen gleichzeitig ausführt, nämlich zusätzlich zur Drehbewegung noch die Verschiebung in axialer Richtung. Diese Bewegung erfolgt,wenn bei Überschreiten einer bestimmten Gurtbeschleunigung die Drehung des Steuerteils gegenüber der Drehung der Gurtwelle zurückbleibt, oder wenn das Steuerteil von einem Pendel oder einer Kugel betätigten Hebel festgehalten wird und

3

dann eine Drehung der Welle eingeleitet wird. In beiden Fällen verschiebt sich das Steuerteil in axialer Richtung, wodurch das Steuerteil wirkungsmäßig mit dem Sperriegel gekuppelt wird, worauf der Sperriegel eingerückt wird.

Somit bedarf es nur der Steuerschnecke und des Steuerteils, um durch die Schraubbewegung des Steuerteils die Kupplung mit dem Sperriegel herzustellen und den Sperriegel in Sperrstellung zu bringen. Damit können eine Reihe von zusätzlichen Bauteilen, wie sie beim Stand der Technik erforderlich waren, völlig entfallen, und es ergibt sich eine entsprechende Montageerleichterung. Es soll noch darauf hingewiesen werden, daß das Steuerteil wie auch die Steuerschnecke und das Übertragungsglied keinerlei Sperrkräfte zu übertragen haben oder aufnehmen müssen, da sie ja lediglich den Sperriegel in Eingriff mit dem Sperrad bringen müssen. Diese Teile sind daher zweckmäßigerweise aus Kunststoff angefertigt. Hierdurch ergibt sich eine relativ große Gewichtsersparnis.

Gemäß Anspruch 2 ist die Steigung der Schnecke so gewählt, daß das Steuerteil bei einer vorbestimmten Drehbeschleunigung des Gurtes relativ zur Welle verdrehbar ist. Damit dient das Steuerteil als Trägheitsscheibe, ohne daß es weiterer Hilfsmittel bedarf. Sobald die Welle eine bestimmte Drehbeschleunigung überschreitet, bleibt die Trägheitsscheibe zurück, wodurch der Verriegelungsvorgang in der beschriebenen Weise eingeleitet wird.

Nach Anspruch 3 ist das Steuerteil mit einem Zahnkranz versehen, mit dem ein bei Bewegungen des Fahrzeugs betätigter Hebel in Eingriff bringbar ist.

Gemäß Anspruch 4 ist das Steuerteil bei seiner Schraubbewegung auf der Steuerschnecke mit einem Übertragungsglied

4

kuppelbar, das drehbar angeordnet und mit mit dem Sperriegel zusammenwirkenden Steuerkanten versehen ist. Somit erfolgt die Verrastung des Steuerteils mit dem zwischen dem Steuerteil und dem Sperriegel angeordneten Übertragungsglied beim axialen Verschieben des Steuerteils. Vorzugsweise erfolgt die Kupplung durch eine stirnseitig an dem Steuerteil und dem Übertragungsglied vorgesehene Verzahnung.

Das Übertragungsglied selbst ist gemäß Anspruch 6 ringförmig ausgebildet und gegen Federkraft verdrehbar, wobei ein Übertragungsglied ringförmig ausgebildet und gegen Federkraft verdrehbar ist, wobei eine am Umfang des Übertragungsgliedes angeformte Steuerkante auf der der Welle abgekehrten Seite des im Gehäuse schwenkbar angeordneten Sperriegels und eine weitere Steuerkante auf der gegenüberliegenden Seite des Sperriegels anliegt. Hierdurch ergibt sich eine gleichmäßige Kräfteverteilung beim Ansprechen der Sperrvorrichtung. Die Verrastung der Verzahnung des scheibenförmigen Steuerteils mit den Zähnen am ringförmigen Übertragungsglied erfolgt gleichmäßig längs des gesamten Umfangs, so daß einseitige und punktförmige Belastungen sowie auch die Gefahr eines Verkantens oder Klemmens vermieden sind.

Gemäß Anspruch 7 sind an dem Übertragungsglied zwei axial symmetrisch angeordnete, sich in Umfangsrichtung erstreckende und gehäuseseitig abgestützte federnde Arme angeformt. Dadurch wird das Übertragungsglied symmetrisch und mittig ausgerichtet zur Welle gehalten. Außerdem dienen die federnden Arme in bekannter Weise (DE-OS 28 45 010) zum Zurückführen des Übertragungsgliedes und des Sperriegels in die Lösestellung. Beim Drehen in die Sperrstellung werden nämlich die Arme gespannt, so daß sie nach Freigabe von seiten des Steuerteils das Übertragungsglied in die Lösestellung zurückholen.

Ferner weist nach Anspruch 8 das ringförmige Übertragungsglied auf der dem Gehäuse zugekehrten Seite eine Stirnwand auf, in deren Öffnung die zum Aufwickeln des Gurtes dienende Rolle geführt ist. Beim An- und Ablegen des Gurtes durch den Fahrer wird auf diese Weise die Gurtrolle in der Lagerbohrung der Stirnwand des Übertragungsgliedes geführt, das mittels der beiden symmetrischen federnden Arme mittig und elastisch gehalten ist. Es wird damit das Anlaufen der Gurtrolle in der Bohrung des Gehäuses vermieden, wodurch sich eine Geräuschdämpfung ergibt.

Gemäß Anspruch 9 ist die Steuerschnecke auf das freie Ende der Gurtrolle aufsteckbar und formschlüssig gehalten. Ferner ist gemäß Anspruch 10 die Steuerschnecke mit einem Ringflansch versehen, der das Steuerteil in axialer Richtung auf der Steuerschnecke sichert. Damit werden erhebliche fertigungstechnische Vorteile erzielt. Die auf die als Flachstahlwelle ausgeführte Welle aufgesteckte Gurtrolle besitzt an ihrem freien Ende eine die Welle zwischen sich einschließende Verlängerung. Nach dem Aufsetzen des Übertragungsgliedes und dem Aufschieben des Sperrades wird die das Steuerteil tragende Steuerschnecke aufgesteckt. Zum formschlüssigen Halten der Steuerschnecke auf der Verlängerung dient je eine Verriegelungsnase. Am Ende wird die Flachstahlwelle eingeschoben.

Schließlich ist zwischen Steuerteil und Sperrad eine Wendelfeder angeordnet. Durch die Feder wird das Steuerteil axial außer Eingriff mit dem Übertragungsglied gedrückt, sobald die auf den Gurt wirkende Zugkraft verschwindet. Sind Steuerteil und Übertragungsglied auf diese Weise entkuppelt, so können die an dem Übertragungsglied angeformten federnden Arme das Übertragungsglied in die Drehstellung zurückführen, in der der Sperriegel gelöst ist.Damit wird die Lösestellung der Sperrvorrichtung zuverlässig

6

erreicht. Dies erfolgt auch bei Betätigung der Sperrvorrichtung durch Eingreifen des pendel- oder kugelbetätigten Hebels in die Verzahnung des Sperrteils.

Nach Anspruch 12 können die Enden der Wendelfeder jeweils mit dem Sperrad und dem Steuerteil verbunden sein. Zusätzlich zur Steigung der Steuerschnecke läßt sich dann durch die Federkraft bestimmen, bei welcher Gurtbeschleunigung das Steuerteil gegenüber der Gurtwelle zurückbleibt. Normalerweise ist jedoch die Wahl der Gewindesteigung im Zusammenhang mit der das Steuerteil in die Lösestellung drückenden Wendelfeder ausreichend.

Ferner sind zwei einander gegenüberliegende Sperriegel vorgesehen. Infolge der symmetrischen Anordnung von Steuerteil und Übertragungsglied lassen sich ohne weiteres zwei oder mehrere Sperriegel vorsehen, wodurch sich wiederum symmetrische Kräfte am Übertragungsglied ergeben, wodurch sich die Sicherheit der Sperrvorrichtung erhöht.

Ein Ausführungsbeispiel der Erfindung ist nachstehend anhand der Zeichnung näher erläutert. Es zeigt:

Fig. 1 einen Achsenschnitt durch die Sperrvorrichtung längs der Linie BB in Fig. 2;

Fig. 2 eine Draufsicht auf die Sperrvorrichtung, wobei im oberen Teil ein Schnitt in Pfeilrichtung A der Fig. 1 dargestellt ist.

In der Zeichnung ist von dem am Fahrzeug zu befestigenden U-förmigen Gehäuse 10 nur die eine Seite dargestellt, auf der die Sperrvorrichtung angeordnet ist, während auf der anderen, nicht dargestellten Seite des Gehäuses die Feder zum Aufwickeln des Gurtes in bekannter Weise vorgesehen ist. Auf einer Flachstahlwelle 12 ist eine den Gurtwickel aufnehmende Gurtrolle 14 aufgeschoben. Das Gurtende ist in nicht dargestellter Weise an der Welle 12 befestigt. Die Gurtrolle 14 weist zu beiden Breitseiten der Welle 12 zwei stegförmige Verlängerungen 15, 16 auf, deren Enden mit Verriegelungsnasen 17, 18 versehen sind. Zwischen einem an der Rolle 14 angeformten und sich durch die Bohrung des Gehäuses 10 erstreckenden Ring 19 und den Verlängerungen 15 und 16 ist eine Scheibe 20 eingesetzt, die zum Ausgleich zwischen der Flachstahlwelle und dem angeformten Ring 19 dient.

Auf der Welle 12 ist ferner ein Sperrad 22 drehfest befestigt, an dessen äußerem Umfang Sperrzähne 23 vorgesehen sind.

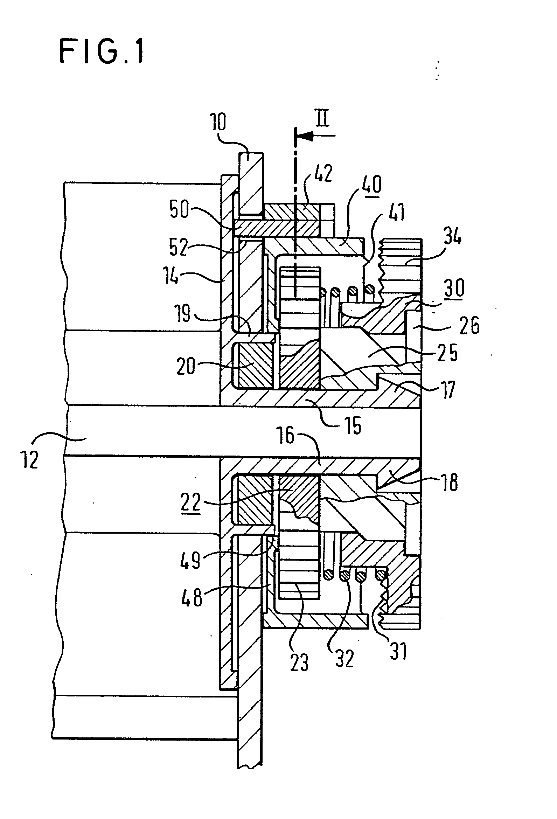

Anschließend an das Sperrad 22 ist auf die Verlängerungen 15 und 16 der Gurtrolle eine Steuerschnecke 25 aufgesetzt, die durch die Nasen 17, 18 formschlüssig gehalten ist. Die Steuerschnecke 25 trägt mehrere Schneckengänge, deren Steigung in Fig. 1 etwa angedeutet ist. Hierauf ist ein Steuerteil 30 verschraubt, das durch einen Ringflansch 26 der Steuerschnecke gesichert und durch eine Feder 32, die sich auf dem Sperrad 22 abstützt, an dem Ringflansch 26 gehalten ist. Stirnseitig trägt das Steuerteil 30 eine Verzahnung 31.

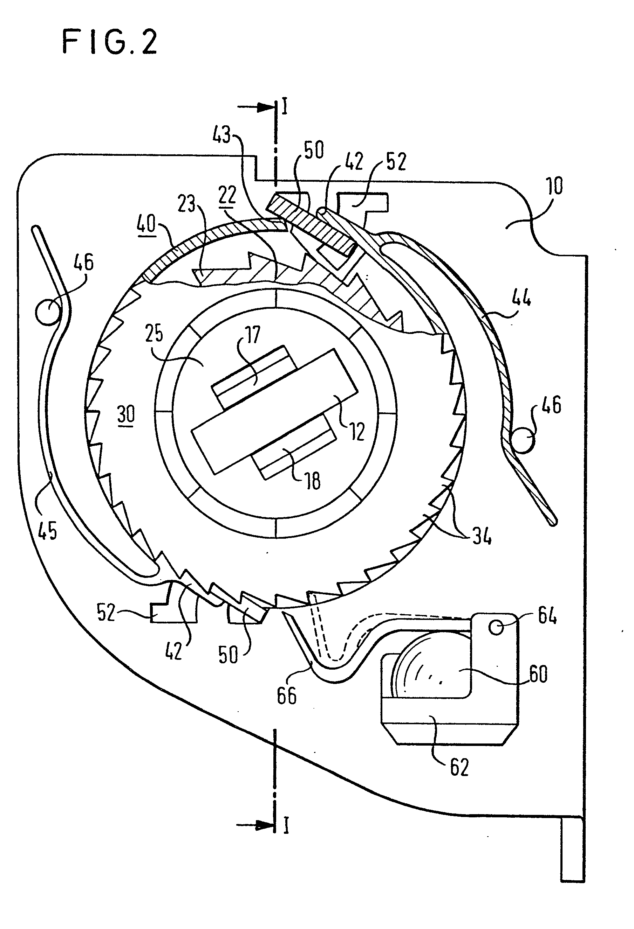

Ein Übertragungsglied 40 ist ringförmig ausgebildet, wie insbesondere aus Fig. 2 ersichtlich. An seiner Stirnseite trägt es Zähne 41. An gegenüberliegenden Stellen seines Umfangs sind Steuerkanten 42, 43 angeformt, die an den Steueraußenkanten und Steuerinnenkanten je eines Sperriegels 50 anliegen, der in Ausschnitten 52 des Gehäuses 10 schwenkbar gelagert und abgestützt ist. Ferner weist das ringförmige Übertragungsglied zwei einander gegenüberliegende, sich etwa in Umfangsrichtung erstreckende, biegsame und federnde Arme 44, 45 auf, die sich an Zapfen 46 des Gehäuses 10 anlegen. Die Arme 44, 45 halten das Übertragungsglied mittig. Das Übertragungsglied 40 ist ferner zwischen dem Gehäuse 10 und dem Sperrad 22 mit einer Stirnwand 48 versehen, wobei der Durchmesser der Bohrung 49 im Vergleich zum Durchmesser der Bohrung in der Gehäuseseite 10 so gewählt ist, daß der an der Gurtrolle 14 angeformte Ring 19 in der Bohrung 49 der Stirnwand 48 geführt ist. Beim Drehen der Gurtwelle zum An- und Ablegen des Gurtes ist so ein Anlaufen und Schlackern der Rolle an der Bohrung des Gehäuses vermieden. Damit läßt sich eine Geräuschdämpfung erzielen.

Zur Hemmung des Steuerteils 30 bei Bewegungen des Fahrzeugs dient eine Kugel 60, die in einer nicht dargestellten Vertiefung eines Halters 62 gelagert ist und beim Herauswandern aus ihrer dargestellten Mittellage einen bei 64 schwenkbar gelagerten Hebel 66 hochdrückt, der damit in Eingriff mit einer Verzahnung 34 am äußeren Umfang des Steuerteils 30 gelangt. Sobald nun die Gurtwelle eine geringe Drehung ausführt, wandert das Steuerteil auf der Steuerschnecke 25 axial nach innen und verrastet über die Verzahnung 31 mit den Zähnen 41 des Übertragungsgliedes 40, das dadurch eine Drehung ausführt, wodurch die Steueraußenkante 42 die Sperriegel 50 in Eingriff mit den Zähnen 23 des Sperrades 22 bringen. In gleicher Weise erfolgt die Betätigung der Sperrvorrichtung, wenn beim Ausziehen des Gurtes die Welle 12 eine bestimmte Beschleunigung überschreitet. In diesem Fall dreht sich die Steuerschnecke 25 schneller als das Steuerteil 30, das somit zurückbleibt, wodurch es ebenfalls auf der Steuerschnecke nach innen wandert, mit dem Übertragungsglied verrastet und dieses die Sperriegel 50 in Eingriff mit dem Sperrad 22 bringt.

Sobald die auf den Gurt wirkenden Kräfte nachlassen, kann die Feder 32 das Steuerteil 30 auf der Steuerschnecke 25 in die Freigabestellung zurückdrehen, wodurch die Verrastung mit dem Übertragungsglied 40 gelöst wird und dieses mittels der federnden Arme 44, 45 in die Lösestellung zurückgedreht wird, in der die Sperriegel 50 über die inneren Steuerkanten 43 außer Eingriff mit den Zähnen 23 des Sperrades 22 geführt werden.

Das Übertragungsglied kann auch eine andere Form aufweisen und muß nicht ringförmig sein. Insbesondere kann das Übertragungsglied auch entfallen, wenn das Steuerteil unmittelbar mit dem Sperriegel kuppelbar ist und den Sperriegel in die Verriegelungsstellung bringt. In diesem Fall kann der Sperriegel mit einem Zapfen oder Nocken versehen sein, der direkt durch das Steuerteil angesteuert wird, das entsprechende Steuerkanten, z.B. in Form einer innenseitigen Schnecke, aufweist.

PATENTANSPRÜCHE:

1. Automatische Sperrvorrichtung für einen Sicherheitsgurt mit einem an einem Fahrzeug befestigten Gehäuse, in dem eine Welle zum Aufwickeln des Gurtes drehbar angeordnet ist, mit einem auf der Welle befestigten, Sperrzähne tragenden Sperrad, mindestens einem am Gehäuse abgestützten Sperriegel und einem Steuerteil, das beim Ausziehen des Gurtes und/oder Bewegungen des Fahrzeuges betätigbar ist, und den Sperriegel in Eingriff mit dem Sperrad bringt, dadurch gekennzeichnet, daß das Steuerteil (30) auf der Welle (12) mittels einer Steuerschnecke (25) gelagert ist, bei seiner Schraubbewegung auf der Steuerschnecke mit dem Sperriegel (50) kuppelbar ist und den Sperriegel über eine Steuerkante in Eingriff mit dem Sperrad (22) bringt.

2. Sperrvorrichtung nach Anspruch 1, dadurch gekennzeichnet, daß die Steigung der Steuerschnecke (25) so gewählt ist, daß das Steuerteil (30) bei einer vorbestimmten Drehbeschleunigung des Gurtes relativ zur Welle (12) verdrehbar und axial verschiebbar ist.

3. Sperrvorrichtung nach Anspruch 1 oder 2, dadurch gekennzeichnet, daß das Steuerteil (30) mit einem Zahnkranz (34) versehen ist, mit dem ein bei Bewegungen des Fahrzeuges betätigter Hebel (66) in Eingriff bringbar ist.

4. Sperrvorrichtung nach einem der Ansprüche 1-3, dadurch gekennzeichnet, daß das Steuerteil (30) bei seiner Schraubbewegung auf der Steuerschnecke (25) mit einem Übertragungsglied (40) kuppelbar ist, das drehbar angeordnet und mit einer mit dem Sperriegel (50) zusammenwirkenden Steuerkante (42, 43) versehen ist.

5. Sperrvorrichtung nach Anspruch 4, dadurch gekennzeichnet, daß das Steuerteil (30) und das Übertragungsglied (40) stirnseitig mit einer Verzahnung (31, 41) versehen sind.

6. Sperrvorrichtung nach Anspruch 4 oder 5, dadurch gekennzeichnet, daß das Übertragungsglied (40) ringförmig ausgebildet und gegen Federkraft verdrehbar ist, wobei eine am Umfang des Übertragungsgliedes angeformte Steuerkante (42) auf der der Welle (12) abgekehrten Seite des im Gehäuse schwenkbar angeordneten Sperriegels (50) und eine weitere Steuerkante (43) auf der gegenüberliegenden Seite des Sperriegels anliegt.

7. Sperrvorrichtung nach einem der Ansprüche 4-6, dadurch gekennzeichnet, daß an dem Übertragungsglied (40) zwei axial symmetrisch angeordnete, sich in Umfangsrichtung erstreckende und gehäuse seitig abgestützte federnde Arme (44, 45) angeformt sind.

8. Sperrvorrichtung nach Anspruch 7, dadurch gekennzeichnet, daß das ringförmige Übertragungsglied (40) auf der dem Gehäuse (10) zugekehrten Seite eine Stirnwand (48) aufweist, in deren Öffnung (49) die zum Aufwickeln des Gurtes dienende Rolle (14) geführt ist.

9. Sperrvorrichtung nach einem der Ansprüche 1-8, dadurch gekennzeichnet, daß die Steuerschnecke (25) auf das freie Ende der Gurtrolle (14) aufsteckbar und formschlüssig gehalten ist.

10. Sperrvorrichtung nach einem der Ansprüche 1-9, dadurch gekennzeichnet, daß die Steuerschnecke (25) mit einem Ringflansch (26) versehen ist, der das Steuerteil (30) in axialer Richtung sichert.

11. Sperrvorrichtung nach einem der Ansprüche 1-10, dadurch gekennzeichnet, daß zwischen Steuerteil (30) und Sperrad (22) eine Wendelfeder (32) angeordnet ist.

12. Sperrvorrichtung nach Anspruch 11, dadurch gekennzeichnet, daß die Enden der Wendelfeder (32) jeweils mit dem Sperrad (22) und dem Steuerteil (30) verbindbar sind.

13. Sperrvorrichtung nach einem der Ansprüche 1-12, dadurch gekennzeichnet, daß zwei einander gegenüberliegende Sperriegel (50) vorgesehen sind.

FIG.1

# FIG.2

Europäisches
Patentamt

**EUROPÄISCHER RECHERCHENBERICHT**

Nummer der Anmeldung

EP 81 10 0142.9

| Kategorie | Kennzeichnung des Dokuments mit Angabe, soweit erforderlich, der maßgeblichen Teile | betrifft Anspruch |
|---|---|---|
| | DE - A1 - 2 547 119 (FUJI KIKO)<br>* Seite 8, Zeile 9 bis Seite 13, Zeile 3 *<br>-- | 1,2 |
| | DE - U1 - 7 900 774 (BRITAX)<br>* Seite 15, Zeile 1 bis Seite 17, Zeile 9 *<br>-- | 1,2 |
| D,A | DE - A1 - 2 845 010 (NYA AB NYHEMS MEKANISKA VERKSTAD)<br>---- | |

**EINSCHLÄGIGE DOKUMENTE**

**KLASSIFIKATION DER ANMELDUNG (Int. Cl.³)**

B 60 R   21/10
A 62 B   35/02

**RECHERCHIERTE SACHGEBIETE (Int. Cl.³)**

A 62 B   35/00
B 60 R   21/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 24-04-1981 | BECKER |

EPA form 1503.1   08.78